(19) Europäisches Patentamt
European Patent Office
Office européen des brevets

(11) **EP 3 109 448 A1**

(12) **EUROPEAN PATENT APPLICATION**

(43) Date of publication:
**28.12.2016 Bulletin 2016/52**

(21) Application number: **16175366.0**

(22) Date of filing: **21.06.2016**

(51) Int Cl.:
**F02D 41/14** *(2006.01)*          **F02D 41/30** *(2006.01)*
**F02B 31/06** *(2006.01)*          **F02D 41/00** *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **23.06.2015   JP 2015125949**

(71) Applicant: **Toyota Jidosha Kabushiki Kaisha
Toyota-shi, Aichi-ken, 471-8571 (JP)**

(72) Inventor: **KORENAGA, Shingo
TOYOTA-SHI, AICHI-KEN, 471-8571 (JP)**

(74) Representative: **Intès, Didier Gérard André et al
Cabinet Beau de Loménie
158 rue de l'Université
75340 Paris Cedex 07 (FR)**

(54) **CONTROL DEVICE FOR INTERNAL COMBUSTION ENGINE**

(57)     Embodiments of the present invention relate to a control device for an internal combustion engine. The control device controls an internal combustion engine 10 that includes a throttle valve and a TCV. The control device selectively implements a stoichiometric mode that causes the internal combustion engine to operate in a stoichiometric region, and a lean mode that causes the internal combustion engine to operate in a lean region. The control device executes a process that places the TCV in a closed state for generating a tumble flow, and a process that places the TCV in an open state for suppressing a tumble flow. A process that switches the TCV from the open state to the closed state is executed during implementation of the lean mode.

Fig. 9

**Description**

BACKGROUND OF THE INVENTION

Field of the Invention

Embodiments of the present invention relate to a control device for an internal combustion engine. More particularly, embodiments of the present invention relate to a control device for an internal combustion engine that is suitable for being used on a vehicle.

Background Art

Japanese Patent Laid-Open No. 2004-293484 discloses an internal combustion engine that appropriately switches an operating mode between a stoichiometric mode that causes the internal combustion engine to operate at an air-fuel ratio around stoichiometry, and a lean mode that causes the internal combustion engine to operate at a lean air-fuel ratio. The aforementioned internal combustion engine includes a flow control valve at a position that is downstream of a throttle valve. When the flow control valve partly closed in an intake passage, the flow velocity of intake air increases and thereby a tumble flow inside a combustion chamber is strengthen.

In the above described internal combustion engine, the flow control valve is closed to generate a strong tumble flow during the lean mode. The tumble flow generated in the combustion chamber promotes mixing of fuel and air, and thus improves the combustibility of the air-fuel mixture. Therefore, in the above described internal combustion engine, good combustibility can be achieved during the lean mode.

In addition, in the above described conventional internal combustion engine, the flow control valve opens to suppress generation of a tumble flow in the stoichiometric mode. The stoichiometric mode is mainly used in a high-speed and high-load region. When a strong tumble flow arises inside a combustion chamber in such an operating state, the ignitability of the air-fuel mixture becomes higher than necessary and knocking is liable to occur. The above described conventional internal combustion engine avoids the occurrence of such a problem by suppressing generation of a tumble flow under the stoichiometric mode. Therefore, according to the aforementioned internal combustion engine, a stable operating state can be realized in the stoichiometric mode also.

List of Related Art

Following is a list of patent literatures which the applicant has noticed as related arts of the present invention.

[Patent Literature 1]
Japanese Patent Laid-Open No. 2004-293484
[Patent Literature 2]
Japanese Patent Laid-Open No. 2003-227395
[Patent Literature 3]
Japanese Patent Laid-Open No. 11-324739
[Patent Literature 4]
Japanese Patent Laid-Open No. 2003-293839

Problem to be solved by Embodiments of the Invention

However, the above described flow control valve changes the effective area of the intake passage due to an opening/closing operation. Therefore, according to the above described internal combustion engine, when the flow control valve changes from an open state to a closed state due to a switching of the operating state from the stoichiometric mode to the lean mode, the intake air amount decreases by a large amount. Consequently, in the aforementioned internal combustion engine, a large torque shock is liable to be generated when the mode is switched from the stoichiometric mode to the lean mode.

Embodiments of the present invention have been made to solve the above described problem, and an object of an embodiment of the present invention is to provide a control device for an internal combustion engine that causes the engine to operate without generating a large torque shock, which engine having a control valve that changes a state between one in which an intake air flow has low velocity and another in which the intake air flow has high velocity, as well as having a function for selectively implementing a stoichiometric mode and a lean mode.

Summary

To achieve the above mentioned purpose, a first aspect of an embodiment of the present invention is a control device for an internal combustion engine that comprises a throttle valve and a flow velocity adjusting valve that controls a flow velocity of intake air at downstream of the throttle valve, wherein

the control device selectively executes a stoichiometric mode that causes the internal combustion engine to operate in a stoichiometric region that includes a theoretical air-fuel ratio and a lean mode that causes the internal combustion engine to operate in a region of an air-fuel ratio that is lean relative to the theoretical air-fuel ratio;

said lean mode being executed in a low-speed and low-load region;

said stoichiometric mode being executed in a high-speed and high-load region that is positioned on a high-speed or high-load side relative to the low-speed and low-load region; and wherein

in a leaning process in which an operating state of the internal combustion engine changes from the stoichiometric mode to the lean mode, the control device switches the flow velocity adjusting valve from an open state to a closed state after the lean mode is executed.

A second aspect of an embodiment of the present invention is the control device for an internal combustion engine according to the first aspect discussed above, wherein, in an enriching process in which the operating state of the internal combustion engine changes from the lean mode to the stoichiometric mode, the control device switches the flow velocity adjusting valve from the closed state to the open state at a time that or after the stoichiometric mode is executed.

A third aspect of an embodiment of the present invention is the control device for an internal combustion engine according to the second aspect discussed above, having

an air-fuel ratio boundary that separates a lean region in which the lean mode is to be implemented and a stoichiometric region in which the stoichiometric mode is to be implemented, and

an opening/closing boundary that separates a closed valve region in which the closed state is to be implemented and an open valve region in which the open state is to be implemented, wherein

in the enriching process, the opening/closing boundary is superposed on the air-fuel ratio boundary or is disposed on a high-speed and high-load side of the air-fuel ratio boundary; and

in the leaning process, the opening/closing boundary is disposed on a low-speed and low-load side of the air-fuel ratio boundary.

A fourth aspect of an embodiment of the present invention is the control device for an internal combustion engine according to the third aspect discussed above, wherein

the opening/closing boundary of the enriching process and the opening/closing boundary of the leaning process are common, and

the air-fuel ratio boundary is switched between the enriching process and the leaning process for being used.

A fifth aspect of an embodiment of the present invention is the control device for an internal combustion engine according to the fourth aspect discussed above, wherein

when starting of the leaning process is detected in the stoichiometric mode, the air-fuel ratio boundary is set between an operating state at a time point at which the starting of the leaning process is detected and the opening/closing boundary.

A sixth aspect of an embodiment of the present invention is the control device for an internal combustion engine according to any one of the first to fifth aspects discussed above, wherein the control device:

calculates an intake air reduction amount that accompanies switching from the open state to the closed state; and
corrects an air-fuel ratio of an air-fuel mixture of immediately after the switching toward a rich side by an amount which is set to be larger as the intake air reduction increases.

A seventh aspect of an embodiment of the present invention is the control device for an internal combustion engine according to the sixth aspect discussed above, wherein the control device:

calculates a torque reduction amount based on the intake air reduction amount and an air-fuel ratio at a time that the open state is switched to the closed state;
calculates a target air-fuel ratio that compensates for the torque reduction amount; and
corrects the air-fuel ratio toward the rich side so that the target air-fuel ratio is realized.

A eighth aspect of and embodiment of the present invention is the control device for an internal combustion engine according to the sixth or seventh aspect discussed above, wherein the control device:

calculates a rich control time period based on a rotation speed of the internal combustion engine when the open state is switched to the closed state; and

terminates the correction of the air-fuel ratio at a time point at which the rich control time period elapses after the switching.

Advantages of Embodiments of the Present Invention

According to the first aspect discussed above, the flow velocity of intake air can be changed by opening/closing a flow velocity adjusting valve that is positioned downstream of a throttle valve. Further, according to the embodiment of the present invention, the internal combustion engine can be operated in a lean mode in a low-speed and low-load region and operated in a stoichiometric mode in a high-speed and high-load region. In a leaning process of the internal combustion engine, the flow velocity adjusting valve is maintained in an open state over the entire region of the stoichiometric mode, and is changed to a closed state after switching to the lean mode is performed. The intake air amount decreases when the flow velocity adjusting valve is changed from an open state to a closed state, and in the embodiment of the present invention this change is performed in the lean mode. Because the output torque in the lean mode is determined by the fuel injection amount, a change in the air amount affects a little to the torque. Therefore, according to the embodiment of the present invention, torque shock due to closing of the flow velocity adjusting valve can be suppressed to a small amount.

According to the second aspect discussed above, in an enriching process of the internal combustion engine, the flow velocity adjusting valve is maintained in a closed state over the entire region of the lean mode, and is switched to an open state at or after a time that the stoichiometric mode is implemented. Therefore, during operation in the lean mode, a strong air flow arises in the cylinders over the entire region of operation, and good combustibility is obtained. Further, in the stoichiometric mode, the ignitability of the air-fuel mixture does not increase to excessively high level, since an air flow in the cylinders is suppressed. Therefore, according to the embodiment of the present invention the internal combustion engine can be smoothly operated during an enriching process.

According to the third aspect discussed above, in the enriching process, the operating state of the internal combustion engine reaches an opening/closing boundary at or after a time that the operating state reaches an air-fuel ratio boundary. Therefore, according to the embodiment of the present invention, a time point at which the flow velocity adjusting valve changes to an open state in an enriching process can be surely at or after a time point at which the lean mode is switched to the stoichiometric mode. Further, according to the embodiment of the present invention, in the leaning process, the operating state does not reach the opening/closing boundary unless the internal combustion engine decelerates to a low-speed and low-load side relative to the air-fuel ratio boundary. Consequently, according to the embodiment of the present invention, a time point at which the flow velocity adjusting valve is switched from an open state to a closed state during the leaning process can be surely after switching from the stoichiometric mode to the lean mode.

According to the fourth aspect discussed above, a relation between the air-fuel ratio boundary and the opening/closing boundary that the third aspect discussed above requires can be simply and easily realized by using different air-fuel ratio boundaries in the enriching process and in the leaning process.

According to the fifth aspect discussed above, an air-fuel ratio boundary that satisfies the relation that the third aspect discussed above requires can be reliably established at a time point at which the leaning process is started.

According to the sixth aspect discussed above, in the leaning process, the air-fuel ratio of the air-fuel mixture can be corrected to the rich side immediately after the flow velocity adjusting valve is switched to a closed state. Therefore, according to the embodiment of the present invention, an amount by which torque decreases due to a decrease in the air amount following a valve closing operation can be compensated for by enrichment of the air-fuel ratio. Enrichment of the air-fuel ratio cannot be performed so as to exceed a rich limit for a three-way catalyst to purify exhaust gas. Therefore, in the stoichiometric mode, the width in which the air-fuel ratio can shift toward a rich direction is inevitably narrow. In the present invention, since a valve closing operation of the flow velocity adjusting valve is performed in the lean mode, it is possible to secure a large width in which the air-fuel ratio can shift toward the rich direction when the flow velocity adjusting valve closes. Therefore, according to the embodiment of the present invention, torque shock due to enrichment of the air-fuel ratio can be absorbed, and the internal combustion engine can be continued to be operated extremely smoothly during the leaning process.

According to the seventh aspect discussed above, a torque reduction amount can be calculated based on an air-fuel ratio when the flow velocity adjusting valve is closed and an intake air reduction amount that accompanies closing of the flow velocity adjusting valve. According to the embodiment of the present invention, a target air-fuel ratio that compensates for the torque reduction amount can also be calculated. Further, by correcting the air-fuel ratio to the rich side so that the target air-fuel ratio is realized, torque shock that accompanies closing of the flow velocity adjusting valve can be absorbed.

According to the eighth aspect discussed above, after the flow velocity adjusting valve is closed, a rich correction of the air-fuel ratio is continued until a rich control time period elapses. The influence of a torque change that accompanies closing of the flow velocity adjusting valve decreases as the operating cycle of the internal combustion engine is repeated.

Further, a period until the aforementioned influence disappears is a period that corresponds to the speed of the internal combustion engine. According to the embodiment of the present invention, by calculating the rich control time period based on the speed of the internal combustion engine, the air-fuel ratio can be subjected to a rich correction so that the correction period accords with a period in which the influence of a torque change disappears.

Brief Description of the Drawings

Fig. 1 is a diagram showing the configuration of a system according to a first embodiment of the present invention;
Fig. 2 is a diagram showing the configuration of the tumble control valve equipped on the internal combustion engine 10 shown in Fig. 1;
Fig. 3 illustrates an example of an air-fuel ratio boundary which is used for switching a lean mode and a stoichiometric mode;
Fig. 4 is a view in which an intake air amount under an open TCV and an intake air amount under a closed TCV are contrasted;
Fig. 5 is a timing chart illustrating changes that arise in an intake air amount following TCV movements under a constant throttle opening angle;
Fig. 6 is a diagram showing an example in which an opening/closing boundary is added on a high-speed and high-load side of the air-fuel ratio boundary shown in Fig. 3;
Fig. 7 is a timing chart for explaining a situation in which a torque shock arises following a TCV closing during a leaning process;
Fig. 8 is a diagram showing an example in which an air-fuel ratio boundary which is used during a leaning process is added on a high-speed and high-load side of the opening/closing boundary shown in Fig. 6;
Fig. 9 is a flowchart of a routine that an electronic control unit executes in the first embodiment of the present invention;
Fig. 10 illustrates a map of an intake air reduction amount ΔGa that the ECU refers to during an execution of the routine shown in Fig. 9;
Fig. 11 illustrates a map of a torque reduction amount ΔTRQ that the ECU refers to during an execution of the routine shown in Fig. 9;
Fig. 12 illustrates a map of a target air-fuel ratio A/Ft that the ECU refers to during an execution of the routine shown in Fig. 9;
Fig. 13 illustrates a map of a rich control time period that the ECU refers to during an execution of the routine shown in Fig. 9;
Fig. 14 illustrates a timing chart showing an example of operation of the first embodiment of the present invention.

Detailed Description

First Embodiment

[Configuration of First Embodiment]

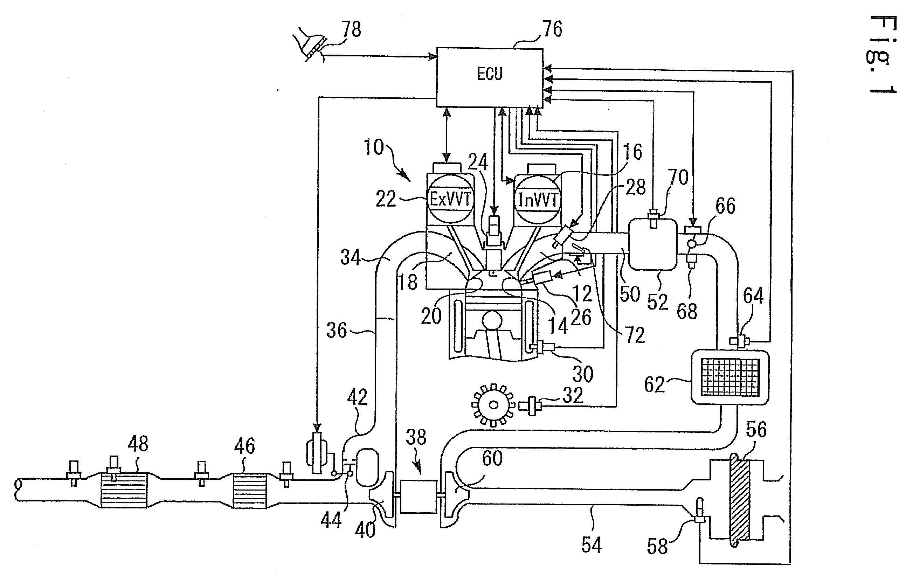

Fig. 1 illustrates the configuration of a first embodiment of the present invention. The present embodiment includes an internal combustion engine 10. The internal combustion engine 10 is equipped with, on an intake port 12 side, a variable valve timing mechanism (hereunder, referred to as "InWT") 16 that drives an intake valve 14. Further, on an exhaust port side, the internal combustion engine 10 is equipped with a variable valve timing mechanism (hereunder, referred to as "ExWT") 22 that drives an exhaust valve 20. The InVVT 16 and ExVVT 22 can change the actuation timing of the intake valve 14 and the exhaust valve 20, respectively.
For each cylinder, the internal combustion engine 10 has a spark plug 24, an in-cylinder injection valve 26 and a port injection valve 28. In addition, a water temperature sensor 30 and a crank angle sensor 32 are mounted in the internal combustion engine 10. A rotation speed Ne of the internal combustion engine 10 can be detected by the crank angle sensor 32.
An exhaust port 18 of the internal combustion engine 10 communicates via an exhaust manifold 34 with an exhaust passage 36. The exhaust passage 36 communicates with a turbocharger 38 at a compressor 40 thereof. The exhaust passage 36 also includes a bypass passage 42 that bypasses the compressor 40. A waste gate valve 44 is built into the bypass passage 42. A three-way catalyst 46 and a NOx reduction catalyst 48 are arranged downstream of the compressor 40 and the bypass passage 42.
The intake port 12 of the internal combustion engine 10 communicates via an intake manifold 50 and a surge tank 52 with an intake passage 54. An air flow meter 58 for detecting an intake air amount Ga is provided in the intake passage 54 at a position that is downstream of the air filter 56. A turbine 60 of the turbocharger 38 is arranged downstream of the air flow meter 58. An intercooler 62, a supercharging pressure sensor 64 and an electronically controlled throttle valve 66 are arranged downstream of the turbine 60.

A throttle opening angle sensor 68 is provided in the vicinity of the throttle valve 66. An intake air pressure sensor 70 that is mounted on the surge tank 52 is arranged downstream of the throttle valve 66. A tumble control valve (hereunder, referred to as "TCV") 72 for adjusting the flow velocity of intake air is mounted downstream of the surge tank 52, that is, inside the intake manifold 50.

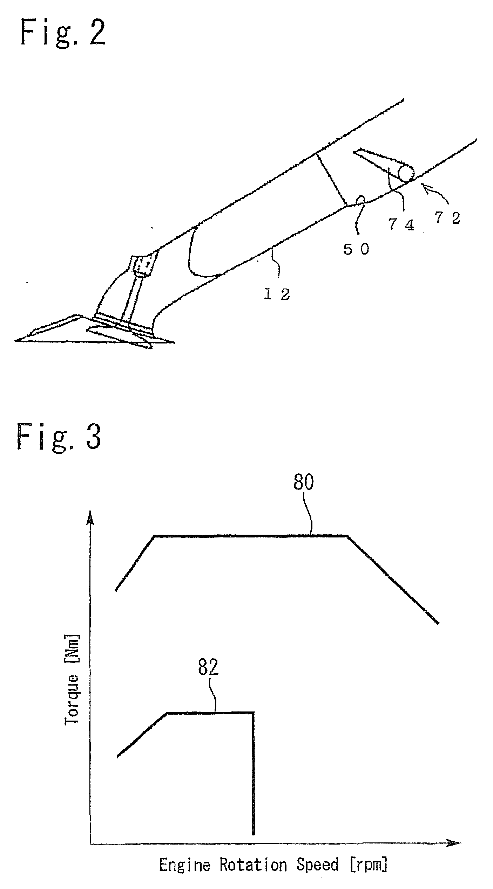

Fig. 2 is a cross-sectional view of the internal combustion engine 10 for describing the configuration of the TCV 72. The TCV 72 includes a pop-up type valve body 74 that is arranged inside the intake manifold 50. The valve body 74 selectively realizes a fully closed state that reduces the effective area of the intake port 12, and a fully open state that secures a large effective area of the intake port 12.

The intake port 12 and the like of the internal combustion engine 10 are configured so that, when the TCV 72 is in the fully closed state, a fast-moving tumble flow arises inside a cylinder during an intake stroke. Further, the internal combustion engine 10 is configured so that, when the TCV 72 is in the fully open state, the flow velocity of intake air is slowed, and an in-cylinder tumble flow is suppressed. Accordingly, in the present embodiment, a fast-moving tumble flow can be generated in a cylinder by placing the TCV 72 in a fully closed state, and the occurrence of such a tumble flow can be suppressed by placing the TCV 72 in a fully open state.

The description of the configuration of the present embodiment will now be continued with reference again to Fig. 1. As shown in Fig. 1, the present embodiment includes an electronic control unit (hereunder, referred to as "ECU") 76. In addition to the above described various sensors and actuators, an accelerator opening degree sensor 78 is also connected to the ECU 76. The ECU 76 can detect a request of a driver of the vehicle based on the output of the accelerator opening degree sensor 78.

[Fundamental Operations of First Embodiment]

(Switching of air-fuel ratio mode)

The internal combustion engine 10 of the present embodiment can selectively use the lean mode and stoichiometric mode in an appropriate manner according to the operating region. The lean mode is an operation mode that uses a lean air-fuel mixture which has an air-fuel ratio (A/F) within a range of twenty-two through twenty-seven. The stoichiometric mode is an operation mode that controls the A/F of the air-fuel mixture to around the theoretical air-fuel ratio.

The lean mode is used in a low-speed and low-load region in which a large output is not required. Fuel consumption characteristics of the internal combustion engine 10 can be improved by using the lean mode, because the consumed quantity of fuel can be suppressed. On the other hand, the stoichiometric mode is used in a high-speed and high-load region. A large torque can be generated by the stoichiometric mode. Therefore, in this mode a request of the driver in a high-speed and high-load region can be responded to appropriately.

As a general rule, the internal combustion engine 10 places the TCV 72 in the fully closed state in the lean mode. When the TCV 72 is in the fully closed state, a fast-moving tumble flow arises in the cylinders of the internal combustion engine 10. When a tumble flow is generated, the combustibility of stratified charge combustion can be improved, and the combustibility of a lean air-fuel mixture can be increased. Therefore, according to the internal combustion engine 10, favorable operating characteristics can be obtained in the lean mode.

Further, as a general rule, the internal combustion engine 10 of the present embodiment places the TCV 72 in the fully open state in the stoichiometric mode. When the TCV 72 is in the fully open state, the flow velocity inside the intake port 12 weakens and a tumble flow in a cylinder is suppressed. If a strong tumble flow arises in a high-speed and high-load region, the combustibility of the air-fuel mixture may be raised excessively and abnormal combustion such as knocking is liable to occur. According to the present embodiment, the occurrence of such abnormal combustion in the high-speed and high-load region can be effectively suppressed.

(Switching of air-fuel ratio mode and switching of TCV)

Fig. 3 illustrates an example of a full opening characteristic 80 and an air-fuel ratio boundary 82 of the internal combustion engine 10. The air-fuel ratio boundary 82 is a boundary at which the lean mode and the stoichiometric mode (hereunder, these two modes are referred to generically as "air-fuel ratio mode") are switched. In the example shown in Fig. 3, a low-speed and low-load side of the air-fuel ratio boundary 82 is a lean region, and a high-speed and high-load side of the air-fuel ratio boundary 82 is a stoichiometric region.

As described above, the internal combustion engine 10 of the present embodiment basically generates a tumble flow in the lean mode, and basically suppresses a tumble flow in the stoichiometric mode. In order to realize the above function, it is conceivable to set an opening/closing boundary for switching opening/closing of the TCV 72 so as to be superposed on the air-fuel ratio boundary 82, for example. However, according to the above described setting, due to the reasons described hereunder, the accuracy of the air-fuel ratio when the internal combustion engine 10 passes through the air-fuel ratio boundary 82 may be largely deteriorated.

[Features of First Embodiment]

(Demerit accompanying superposition of opening/closing boundary of TCV on air-fuel ratio boundary)

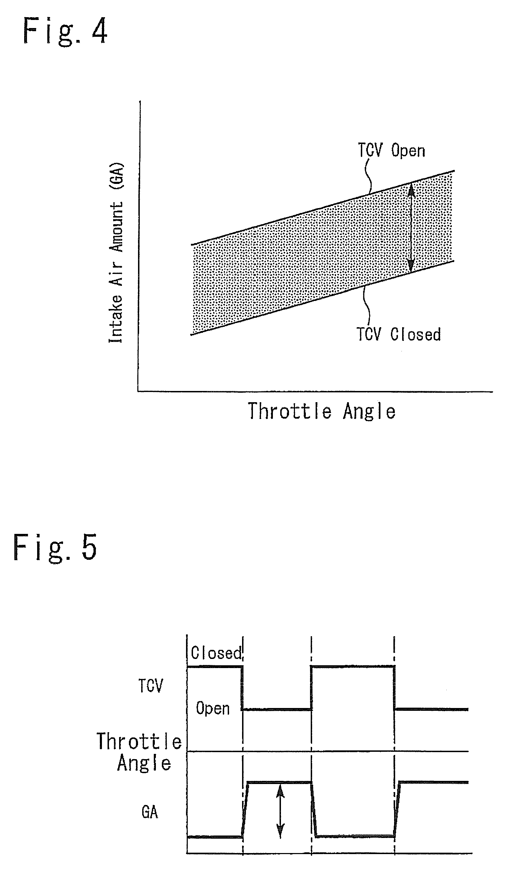

Fig. 4 is a view in which a relation between a throttle opening angle TA and an intake air amount Ga under an open TCV 72 and a relation between TA and Ga under a closed TCV 72 are contrasted. As shown in Fig. 4, the relation between the throttle opening angle TA and the intake air amount Ga significantly changes when opening/closing of the TCV 72 is switched.

Fig. 5 illustrates changes that arise in the intake air amount Ga when the TCV 72 is opened or closed in a state in which the throttle opening angle TA is kept constant. As shown in Fig. 5, in the internal combustion engine 10, a stepped increase in the intake air amount Ga arises when the TCV 72 changes from the closed state to the open state, while on the other hand a stepped decrease in the intake air amount Ga arises when the TCV 72 changes from the open state to the closed state.

The air-fuel ratio of the internal combustion engine 10 is determined by the intake air amount Ga and the fuel injection amount. Here, the intake air amount Ga is determined by the state of the throttle valve 66 and the InVVT 16 as well as the state of the TCV 72. Further, the fuel injection amount is determined by a manner by which the in-cylinder injection valve 26 and the port injection valve 28 are operated. Hereunder, the actuators stated this paragraph other than the TCV 72 are generically referred to as "air-fuel ratio actuators".

When the air-fuel ratio mode is switched, a large change arises in the air-fuel ratio of the air-fuel mixture. Consequently, even if the state of the TCV 72 does not change, a large change of state is required of the above described air-fuel ratio actuators at the time of the air-fuel ratio mode switching. Further, if switching of the TCV 72 is required at the same time as switching of the air-fuel ratio mode, an even larger change of state is required of the air-fuel ratio actuators so as to absorb a large change in Ga that accompanies opening/closing of the TCV 72.

The respective air-fuel ratio actuators such as the throttle valve 66, and the TCV 72 each have individual response delays. Therefore, when a large change of state is required of all of these actuators at the same time, the states of the respective actuators temporarily vary from each other. Under such a situation, a desired control accuracy may not be obtained. To avoid this disadvantage, it is desirable to perform switching of the air-fuel ratio mode in a state in which the state of the TCV 72 is maintained constant.

(Merit of setting opening/closing boundary of TCV in stoichiometric region)

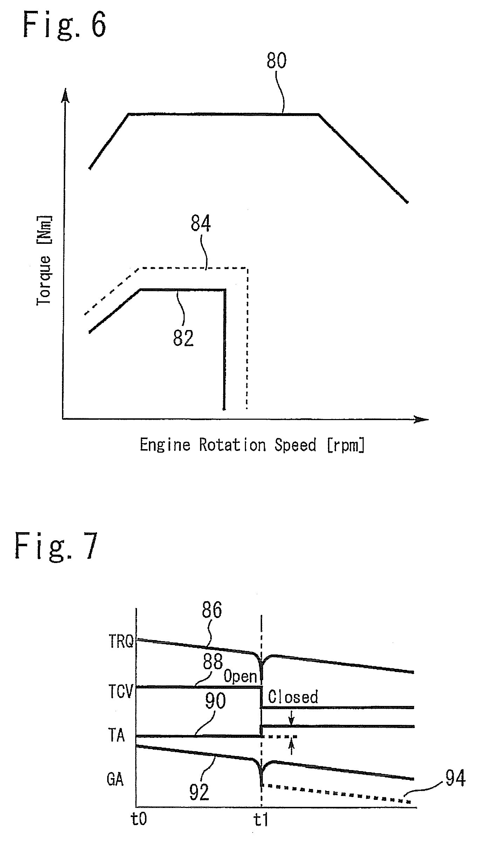

Fig. 6 is a characteristics diagram in which an opening/closing boundary 84 is added on an outer side, that is, a high-speed and high-load side, of the air-fuel ratio boundary 82 shown in Fig. 3. The opening/closing boundary 84 is a boundary for switching between opening and closing of the TCV 72. In the example shown in Fig. 6, a low-speed and low-load side of the opening/closing boundary 84 is a fully closed valve region, and a high-speed and high-load side of the opening/closing boundary 84 is a fully open valve region.

According to the setting shown in Fig. 6, a timing at which the operating state of the internal combustion engine 10 crosses the air-fuel ratio boundary 82 and a timing at which the operating state of the internal combustion engine 10 crosses the opening/closing boundary 84 can be made to differ from each other. Therefore, according to this setting, the occurrence of a situation in which switching of the air-fuel ratio mode and switching of the TCV 72 are performed at the same time can be reliably avoided.

Apart from the setting illustrated in Fig. 6, it is conceivable to provide an opening/closing boundary of the inner side of the air-fuel ratio boundary 82 (hereunder, this setting is referred to as "comparative setting") as a setting that makes the timing at which the air-fuel ratio mode is switched and the timing at which the TCV 72 is switched different to each other. However, according to this setting, in a region that is sandwiched by the hypothetical opening/closing boundary and the air-fuel ratio boundary 82, the lean mode is executed in a state in which the TCV 72 is open.

In the present embodiment the air-fuel ratio boundary 82 is set in the vicinity of a limit of a region in which the lean air-fuel mixture exhibits favorable combustibility as a result of a tumble flow arising. Therefore, in a state in which the TCV 72 is open and a tumble flow is suppressed in the lean mode, a situation in which stable operation cannot be maintained may arise.

In contrast, according to the setting illustrated in Fig. 6, the TCV 72 is maintained in a fully closed state over the entire region of the lean mode. Consequently, according to this setting, a lean air-fuel mixture can be favorably combusted over the entire region of the lean mode. In this respect, the setting illustrated in Fig. 6 is superior to the above described comparative setting.

Further, according to the setting illustrated in Fig. 6, the operating state of the internal combustion engine 10 exhibits the changes described hereunder during an enriching process, for example. Here, the term "enriching process" refers to a process in which the operating state of the internal combustion engine 10 changes from the lean mode to the stoichiometric mode. In the present embodiment, the enriching process overlaps with a process in which the operating state of the internal combustion engine 10 changes from the low-speed and low-load region towards the high-speed and high-load region.

(Change during the Enriching Process)

(1) "Lean mode and TCV fully closed state" → (2) "Stoichiometric mode and TCV fully closed state" → (3) "Stoichiometric mode and TCV fully open state". That is, according to this setting, the process in the above described (2) involves the combination of "stoichiometric mode" and "TCV fully closed state".

In the stoichiometric mode, it is desirable that the occurrence of a tumble flow is suppressed from the viewpoint of suppressing abnormal combustion such as knocking. Accordingly, a state in which the stoichiometric mode is combined with the TCV fully closed state, as in the above described (2), is not necessarily desirable. However, a region in which the above described (2) state arises due to the setting illustrated in Fig. 6 is a region that is sandwiched by the air-fuel ratio boundary 82 and the opening/closing boundary 84, that is, a limited region in which neither the speed nor the engine load are particularly high within the stoichiometric region. In such a region, abnormal combustion such as knocking almost never occurs, even if a tumble flow arises. Therefore, the above described (2) state does not cause a substantial disadvantage.

According to the setting illustrated in Fig. 6, in the enriching process of the internal combustion engine 10, the TCV 72 is switched from the fully closed state to the fully open state after switching to the stoichiometric mode is performed. When the TCV 72 that is in the fully closed state is changed to the fully open state, the intake air amount Ga may suddenly increase in a short period. An increase in the intake air amount Ga in the stoichiometric mode leads to an increase in the output torque. However, such an increase in torque can be absorbed by a correction that reduces the fuel injection amount. Therefore, a change in the intake air amount Ga that is caused by a change in the TCV 72 from the closed state to the open state is also not a change that causes a substantial disadvantage.

(Demerit of setting opening/closing region of TCV in stoichiometric region)

As described above, the setting shown in Fig. 6 is a favorable setting with regard to switching the air-fuel ratio mode and the TCV 72 at appropriate timings, respectively, and in particular with regard to suitably switching the air-fuel ratio mode and the TCV 72 during an enriching process of the internal combustion engine 10. However, according to the setting shown in Fig. 6, as described below, torque shock is liable to arise during a leaning process of the internal combustion engine 10. Here, the term "leaning process" refers to a process in which the operating state of the internal combustion engine 10 changes from the stoichiometric mode to the lean mode. In the present embodiment, the leaning process overlaps with a process in which the operating state of the internal combustion engine 10 changes from the high-speed and high-load region towards the low-speed and low-load region.

Fig. 7 is a view that represents operations of the internal combustion engine 10 during the leaning process in a case in which the setting shown in Fig. 6 is used. In Fig. 7, a waveform denoted by reference numeral 86 represents an output torque (TRQ) of the internal combustion engine 10. From a time t0 onwards, the TRQ 86 exhibits a decreasing tendency accompanying deceleration of the internal combustion engine 10.

A waveform denoted by reference numeral 88 represents the state of the TCV 72. In Fig. 7, the TCV 72 changes from the fully open state to the fully closed state at a time t1. That is, the example of operations shown in Fig. 7 illustrates a case where, at the time t1, the operating state of the internal combustion engine 10 has fallen until the opening/closing boundary 84.

A waveform denoted by reference numeral 90 represents changes in the throttle opening angle TA. From the time t0 onwards, the throttle opening angle TA exhibits a slightly decreasing tendency accompanying deceleration of the internal combustion engine 10. At the time t1, to compensate for a decrease in the intake air amount Ga accompanying full closing of the TCV 72, a stepped increase is applied to the throttle opening angle TA.

In Fig. 7, reference numeral 92 denotes a waveform of the intake air amount Ga. From the time t0 onwards, the intake air amount Ga exhibits a decreasing tendency accompanying deceleration of the internal combustion engine 10. Further, at the time t1, the intake air amount Ga exhibits a temporary sharp decrease accompanying full closing of the TCV 72. At the time t1, although the throttle opening angle TA increases in a step-like manner, a convergence time period of a certain amount is required until the intake air amount Ga converges on an amount that corresponds to TA after the change. Consequently, even if TA is changed in a step-like manner accompanying full closing of the TCV 72, a temporary decrease as shown in Fig. 7 arises in the intake air amount Ga. Note that, a waveform 94 indicated by a broken line in the section for the intake air amount represents a supposed intake air amount in a case where the throttle opening angle TA does not increase in a step-like manner and maintains the same opening degree as in a case where the TCV 72 is closed at the time t1.

According to the setting illustrated in Fig. 6, an operation to fully close the TCV 72 is performed in the stoichiometric mode. In the stoichiometric mode, the torque TRQ of the internal combustion engine 10 is mainly determined by the intake air amount Ga. Consequently, if a temporary decrease arises in the intake air amount Ga, a similar temporary decrease will also arise in the torque TRQ.

As a method for compensating for a decrease in the torque TRQ, it is conceivable to increase the fuel injection amount so as to enrich the air-fuel ratio. However, the air-fuel ratio of the air-fuel mixture cannot be enriched beyond a limit at which it is possible for the three-way catalyst 46 to purify exhaust gas. Thus, under circumstances in which the internal combustion engine 10 is operating in the stoichiometric mode, a correctable width of the air-fuel ratio toward the rich side is not so large. Consequently, as shown in Fig. 7, torque shock (a temporary decrease in torque) is liable to arise in the torque of the internal combustion engine 10 in synchrony with the TCV 72 being closed in the leaning process when the setting illustrated in Fig. 6 is used. In this respect, the setting shown in Fig. 6 is not necessarily the optimal setting as a setting to be used in the leaning process of the internal combustion engine 10.

(Setting of air-fuel ratio boundary for leaning process)

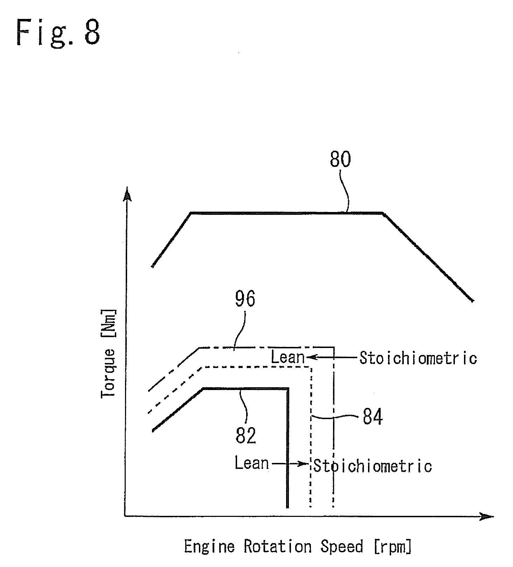

Fig. 8 is a characteristics diagram in which an air-fuel ratio boundary 96 that is used only in a leaning process is added on the outer side of the opening/closing boundary 84 shown in Fig. 6. According to the setting shown in Fig. 8, during the enriching process of the internal combustion engine 10, the operating state thereof passes through the opening/closing boundary 84 after passing through the air-fuel ratio boundary 82. That is, the tumble flow is maintained over the entire region of the lean mode, and the TCV 72 changes from the closed state to the open state after the air-fuel ratio mode is switched to the stoichiometric mode. In this case, similarly to the case in which the setting shown in Fig. 6 is used, the internal combustion engine 10 can smoothly operate over the entire operating region.

On the other hand, according to the setting shown in Fig. 8, in the leaning process, the operating state of the internal combustion engine 10 first crosses the air-fuel ratio boundary 96, and next crosses the opening/closing boundary 84 (the opening/closing boundary 84 is used in common for both the enriching process and the leaning process). In this case, first, switching from the stoichiometric mode to the lean mode occurs, and thereafter the TCV 72 is switched from the fully open state to the fully closed state. That is, according to this setting, an operation to fully close the TCV 72 occurs during implementation of the lean mode.

The output torque TRQ of the internal combustion engine 10 that is operating in the lean mode is mainly determined by the fuel injection amount. Therefore, even if the intake air amount Ga decreases accompanying an operation to fully close the TCV 72, if the timing thereof is during implementation of the lean mode, the torque TRQ of the internal combustion engine 10 does not largely decrease. Further, the amount by which the torque TRQ decreases can be compensated by increasing the fuel injection amount so as to enrich the air-fuel ratio of the air-fuel mixture. Note that, under circumstances in which the internal combustion engine 10 is operating in the lean mode, there is a large difference between the current air-fuel ratio and a rich limit at which purification is possible, and thus a large correction width for the air-fuel ratio toward the rich side is secured. Therefore, in a case where an operation to fully close the TCV 72 is performed in the lean mode, torque shock that accompanies a decrease in the intake air amount Ga can be adequately suppressed, and smooth operation of the internal combustion engine 10 can be continued.

As described above, according to the setting shown in Fig. 8, in the enriching process and in the leaning process, the internal combustion engine 10 can be smoothly operated over the entire operating region. Therefore, the present embodiment uses the setting shown in Fig. 8 for controlling the air-fuel ratio mode and the states of the TCV 72.

(Processing by ECU)

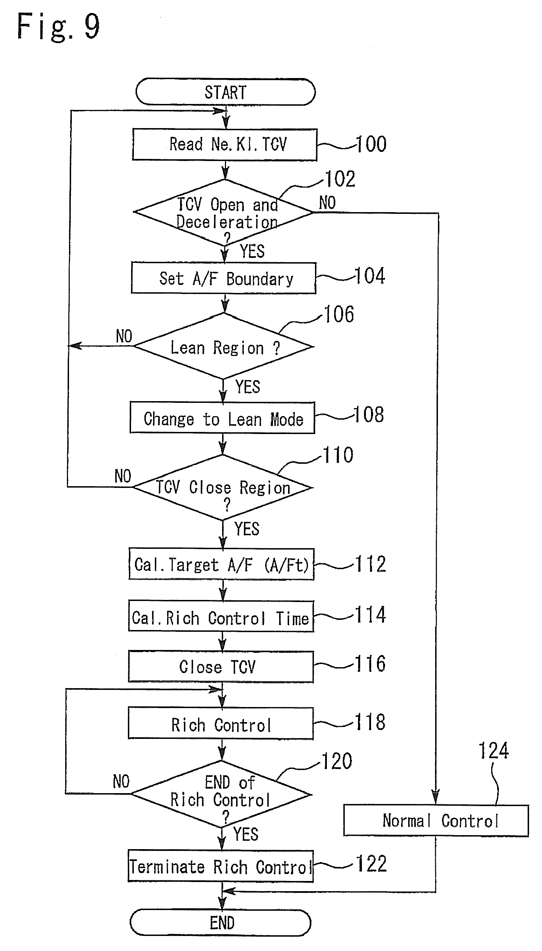

Fig. 9 illustrates a flowchart of a routine that the ECU 76 executes in the present embodiment. The routine shown in Fig. 9 is repeatedly executed at predetermined time intervals after the internal combustion engine 10 is started. When this routine is activated, parameters relating to the operating state of the internal combustion engine 10 are read in firstly (step 100). Specifically, in this step, the engine speed Ne, an engine load Kl, and the state of the TCV 72 are read in.

When the above described processing ends, the ECU 76 then determines whether or not the following two conditions are both established (step 102):

- The TCV 72 is fully open; and
- The internal combustion engine 10 is in a deceleration state.

In this step, if the operating state of the internal combustion engine 10 is moving from the high-speed and high-load side towards the low-speed and low-load side, more specifically, if at least one of the engine speed Ne and the

engine load KI is exhibiting a decreasing tendency, it is determined that the internal combustion engine 10 is in a deceleration state.

If the determination in the aforementioned step 102 is affirmative, it can be determined that the operating state of the internal combustion engine 10 is changing in a direction towards the opening/closing boundary 84 that is shown in Fig. 8, on the outer side (high-speed and high-load side) of the opening/closing boundary 84. In this case, the ECU 76 sets the air-fuel ratio boundary 96 (see Fig. 8) for the leaning process (step 104). The ECU 76 stores a plurality of data sets of the air-fuel ratio boundary 96 that is located on the high-speed and high-load side of the opening/closing boundary 84 shown in Fig. 8. In the present step 104, specifically, among the plurality of data sets, a data set that is located around midway between the current operating state and the opening/closing boundary 84 is set as the air-fuel ratio boundary 96 in the leaning process. It should be noted that, the air-fuel ratio boundary 96 is set only when the present step is performed immediately after an affirmative determination is newly made in the aforementioned step 102, and the air-fuel ratio boundary 96 is then maintained until an affirmative determination is newly made again in step 102.

When the above described processing ends, it is then determined whether or not the operating state of the internal combustion engine 10 has entered the lean region (step 106). In this step, more concretely, it is determined whether or not the combination of the engine speed Ne and the engine load KI moved from the outer side (high-speed and high-load side) of the air-fuel ratio boundary 96 to the inner side (low-speed and low-load side) thereof in a time period from the previous processing cycle to the current processing cycle.

If it is determined that the operating state of the internal combustion engine 10 has not yet entered the lean region, the ECU 76 returns again to the aforementioned step 100 to determine whether or not the leaning process of the internal combustion engine 10 is continuing. On the other hand, if it is determined that the operating state has entered the lean region, the operation mode of the internal combustion engine 10 is changed from the stoichiometric mode to the lean mode (step 108).

When the above described processing ends, it is then determined if the operating state of the internal combustion engine 10 has entered a fully closed region of the TCV 72 (step 110). In this step, specifically, it is determined whether or not the combination of the engine speed Ne and the engine load KI moved from the outer side of the opening/closing boundary 84 shown in Fig. 8 to the inner side thereof in a time period from the previous processing cycle to the current processing cycle.

If it is determined that the operating state of the internal combustion engine 10 has not entered the region on the inner side of the opening/closing boundary 84, the ECU 76 returns again to the aforementioned step 100 to determine whether or not the leaning process of the internal combustion engine 10 is continuing. In contrast, in the above step 110, if it is determined that the operating state of the internal combustion engine 10 has entered the region on the inner side of the opening/closing boundary 84, processing for fully closing the TCV 72 without generating a significant torque shock is executed.

Concretely, a target air-fuel ratio to be realized when the TCV 72 is fully closed is firstly calculated (step 112). The processing executed in the present step 112 is specifically described hereunder.

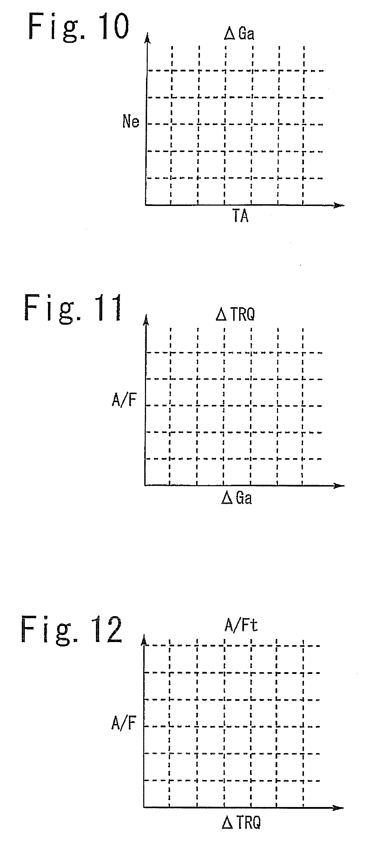

Fig. 10 is a view that illustrates a concept of a map that the ECU 76 stores for calculating an intake air reduction amount $\Delta$Ga. The map illustrated in Fig. 10 defines an intake air reduction amount $\Delta$Ga that accompanies full closing of the TCV 72, using the throttle opening angle TA and the engine speed Ne. In the present step 112, firstly, the intake air reduction amount $\Delta$Ga that accompanies full closing of the TCV 72 is calculated by referring to this map. In the present embodiment, the throttle opening angle TA and the engine speed Ne are used as the parameters that determine the intake air reduction amount $\Delta$Ga. A turbocharging pressure may also be included in the aforementioned parameters, since the internal combustion engine 10 is equipped with the turbocharger 38.

In the present step 112, nextly, a torque reduction amount $\Delta$TRQ that accompanies full closing of the TCV 72 is calculated. Fig. 11 illustrates a concept of a map that the ECU 76 stores for calculating the torque reduction amount $\Delta$TRQ. The map shown in Fig. 11 defines the torque reduction amount $\Delta$TRQ with an intake air reduction amount $\Delta$Ga and an air-fuel ratio. Specifically, in the map shown in Fig. 11, torque reduction amount $\Delta$TRQ is defined for each air-fuel ratio so as to increase as the intake air reduction amount $\Delta$Ga increases. In the present step 112, referring to the map shown in Fig. 11, the torque reduction amount $\Delta$TRQ is calculated based on the intake air reduction amount $\Delta$Ga calculated by the above described processing, and the air-fuel ratio of the current air-fuel mixture (in this step, the air-fuel ratio when the TCV 72 is switched from a fully open state to a fully closed state).

Next, a target air-fuel ratio A/Ft for compensating for the torque reduction amount $\Delta$TRQ is calculated. The target air-fuel ratio A/Ft is an air-fuel ratio that satisfies the following relational expression:

$$\text{Torque (A/Ft)} = \text{torque (A/F)} + \Delta\text{TRQ} \ldots (1)$$

Where, "torque (A/Ft)" represents an output torque that is generated when an air-fuel mixture having the target air-fuel ratio (A/Ft) is prepared with an intake air amount (Ga-ΔGa) that can be secured after the TCV 72 is fully closed. Further, "torque (A/F)" represents an output torque that is generated when an air-fuel mixture having the current air-fuel ratio (A/F) is prepared with the aforementioned intake air amount (Ga-ΔGa).

Fig. 12 is a conceptual diagram of a map in which the target air-fuel ratio A/Ft that satisfies the relation in the above described expression (1) is defined based on the relation with the torque reduction amount ΔTRQ and the air-fuel ratio A/F. The ECU 76 stores a map as shown in Fig. 12, and calculates the target air-fuel ratio A/Ft in accordance with this map based on ΔTRQ that is calculated as described above and the current air-fuel ratio A/F. According to the above described relational expression (1), the larger that the torque reduction amount ΔTRQ is, the richer the value that the target air-fuel ratio A/Ft becomes. Therefore, the map shown in Fig. 12 is also configured so that the larger the torque reduction amount ΔTRQ becomes, that is, the larger the intake air reduction amount ΔGa is, the richer the value to which the target air-fuel ratio A/Ft is set.

When the above processing ends, the ECU 76 then calculates a time period (hereunder, referred to as "rich control time period") in which the air-fuel ratio of the air-fuel mixture should be kept to be enriched to the target air-fuel ratio A/Ft (step 114). The intake air reduction amount ΔGa that accompanies full closing of the TCV 72 disappears during the course of operation of the internal combustion engine 10 being repeated for about 10 to 20 cycles. Therefore, it is desirable for the enriching of the air-fuel ratio for compensating for the torque reduction amount ΔTRQ to be ended accompanying the disappearance of the intake air reduction amount ΔGa.

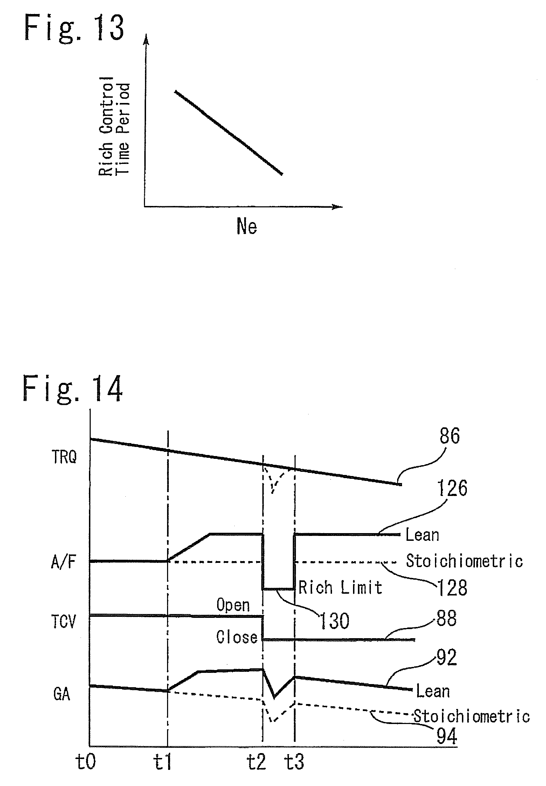

Fig. 13 illustrates a concept of a map that the ECU 76 stores for calculating the rich control time period. A time period that is required for the internal combustion engine 10 to operate for one cycle shortens as the rotation speed Ne increases. Therefore, a time period in which the number of cycles required for the intake air reduction amount ΔGa to disappear are repeated depends on the rotation speed Ne at a time of calculating the rich control time period. In the present step 114, the ECU 76 refers to the map shown in Fig. 13 and sets the rich control time period based on the rotation speed Ne of the internal combustion engine 10. According to this technique, a rich control time period that approximately matches a time period that is required for the torque reduction amount ΔTRQ to disappear can be calculated.

When the above processing ends, the TCV 72 is switched from the fully open state to the fully closed state (step 116). Thereafter, rich control is started. That is, the air-fuel ratio of the air-fuel mixture is switched to the target air-fuel ratio A/Ft that is calculated in the aforementioned step 112 (step 118). According to this processing, the air-fuel ratio of the air-fuel mixture can be enriched immediately after the TCV 72 is switched from the fully open state to the fully closed state. As a result, although the intake air amount Ga decreases, the air-fuel ratio is enriched and the occurrence of torque shock is suppressed.

Next, it is determined whether or not the rich control time period has ended (step 120). The processing in step 118 is repeated until the end of the rich control time period is determined, and the rich control is terminated at a time point at which the end of the rich control time period is determined (step 122). According to the above processing, immediately after the TCV 72 changes to a fully closed state, only for a period in which the torque reduction amount ΔTRQ is generated due to such change, the torque is compensated for by enriching the air-fuel ratio.

Note that the intake air reduction amount ΔGa that accompanies full closing of the TCV 72 does not maintain a constant value after the TCV 72 fully closes. Accordingly, the torque reduction amount ΔTRQ due to the intake air reduction amount ΔGa also naturally does not maintain a constant value. Accordingly, if the target air-fuel ratio A/Ft that is set at the time that the TCV 72 fully closes is used consistently, excessive torque may be generated during execution of rich control. The ECU 76 executes a routine other than the routine shown in Fig. 9 to perform control that, in a case where the output torque of the internal combustion engine 10 exceeds the target torque, retards the ignition timing to thereby lower the output torque to the target torque. Therefore, according to the present embodiment, after the TCV 72 is fully closed, a situation does not arise in which excessive torque is generated due to execution of the rich control.

In step 102 in the routine shown in Fig. 9, if it is determined that the TCV 72 is not in a fully open state or that the internal combustion engine 10 is not decelerating, normal control is performed (step 124). In this case, similarly to the case described with reference to the setting illustrated in Fig. 6, the ECU 76 switches the lean mode to the stoichiometric mode in accordance with the air-fuel ratio boundary 82, and switches the state of the TCV 72 in accordance with the opening/closing boundary 84. As a result, smooth operation of the internal combustion engine 10 is continued in the enriching process, including the moment at which the TCV 72 changes from the closed state to the open state.

Fig. 14 illustrates an example of operations of the present embodiment in the leaning process of the internal combustion engine 10. Among the waveforms shown in Fig. 14, waveforms that are of the same kind as waveforms shown in Fig. 7 are denoted by common reference numerals with respect to Fig. 7. Further, in Fig. 14, a waveform denoted by reference numeral 126 represents an air-fuel ratio during the lean mode, a waveform denoted by reference numeral 128 represents an air-fuel ratio that is used in the stoichiometric mode, and a waveform denoted by reference numeral 130 represents an air-fuel ratio at a rich limit that can be used during rich control.

In the example shown in Fig. 14, from a time t0 onwards, the intake air amount Ga (waveform 92) and the torque (waveform 86) exhibit a decreasing tendency accompanying deceleration of the internal combustion engine 10.

Further, at the time t1, the operating state of the internal combustion engine 10 arrives at the air-fuel ratio boundary 96 (see Fig. 8) and switching from the stoichiometric mode to the lean mode is performed. As a result, from a time t1 onwards, the intake air amount (waveform 92) increases sharply, and the air-fuel ratio (waveform 126) shifts abruptly to the lean side.

In this example, by a time t2, the operating state of the internal combustion engine 10 decelerates until the opening/closing boundary 84 (see Fig. 8). As a result, the following phenomena occur immediately after the time t2:

- The TCV 72 changes from the fully open state to the fully closed state (see waveform 88).
- The intake air amount Ga significantly decreases (see waveform 92).
- The air-fuel ratio that had been controlled to the lean side is corrected by a large amount to the rich side (see waveform 130).
- Because the air-fuel ratio A/F is enriched, the torque TRQ continues to smoothly decrease regardless of the abrupt decrease in the intake air amount Ga (see waveform 86).

In the example in Fig. 14, the temporary decrease in the intake air amount Ga disappears at a time t3, and the rich control time period also ends simultaneously with the time t3 (see waveform 130). Therefore, the torque TRQ of the internal combustion engine 10 does not become excessive in the vicinity of the time t3, and continues to smoothly decrease.

If the internal combustion engine 10 controls the state of the TCV 72 in accordance with the setting illustrated in Fig. 6 without using the air-fuel ratio boundary 96 for the leaning process, the air-fuel ratio at the time t2 will be the air-fuel ratio for the stoichiometric mode that is represented by the waveform 128. As shown in Fig. 14, the air-fuel ratio for the lean mode (waveform 126) is separated by a large amount from the rich limit (waveform 130) in comparison to the air-fuel ratio for the stoichiometric mode. As is clear from this comparison, in a case where the rich control is started from the lean mode, it is possible to secure a large width in which the air-fuel ratio can shift toward the rich side in comparison to a case where the rich control is started from the stoichiometric mode. Therefore, the system of the present embodiment in which the start of rich control is always commenced from the lean mode has a large absorptive capacity with respect to torque shock that accompanies full closing of the TCV 72.

[Modification of First Embodiment]

In the above described first embodiment, a flow velocity adjusting valve that is installed in an intake passage is limited to the TCV 72. However, the configuration of the present invention is not limited thereto. The flow velocity adjusting valve may be any valve mechanism that can generate an air flow inside a cylinder that improves the combustibility in the lean mode, and as long as that function is satisfied, the flow velocity adjusting valve may be, for example, a component that generates an air flow accompanying a tumble flow.

Further, in the above described first embodiment, the air-fuel ratio boundary 96 that is used in the leaning process is set between the operating state of the internal combustion engine 10 and the opening/closing boundary 84 when the deceleration determination (step 102) regarding the internal combustion engine 10 is newly affirmed. However, this setting is not essential in the present invention. That is, a configuration may be simplified by previously setting the air-fuel ratio boundary 96 on the outer side of the opening/closing boundary 84. In this case, the air-fuel ratio boundary 96 is always used during deceleration of the internal combustion engine 10.

Furthermore, in the above described first embodiment, the air-fuel ratio boundary 92 for the leaning process is set on the outer side of the opening/closing boundary 84 in order to close the TCV 72 in the lean region. However, the configuration of the present invention is not limited thereto. That is, a configuration may also be adopted which includes the air-fuel ratio boundary 82, the opening/closing boundary 84 for the enriching process as shown in Fig. 6, and an opening/closing boundary for leaning process which is set on the inner side of the air-fuel ratio boundary 82.

In addition, although the above described first embodiment controls the TCV 72 to be either one of the fully closed state and the fully open state, the configuration of the present invention is not limited thereto. That is, the TCV 72 may be controlled to an opening angle between the fully open state and the fully closed state, such as, for example, controlled to the fully open state and to an 80% closed state.

Description of Reference Numerals

10 Internal combustion engine
26 In-cylinder injection valve
28 Port injection valve

**EP 3 109 448 A1**

66 Throttle valve
72 Tumble control valve (TCV)
74 Valve body
76 Electronic control unit (ECU)
82, 96 Air-fuel ratio boundary
84 Opening/closing boundary

**Claims**

1. A control device (76) for an internal combustion engine (10) that comprises a throttle valve (66) and a flow velocity adjusting valve (72) that controls a flow velocity of intake air at downstream of the throttle valve (66), wherein the control device (76) is configured to selectively execute a stoichiometric mode that causes the internal combustion engine (10) to operate in a stoichiometric region that includes a theoretical air-fuel ratio and a lean mode that causes the internal combustion engine (10) to operate in a region of an air-fuel ratio that is lean relative to the theoretical air-fuel ratio;

   said lean mode being executed in a low-speed and low-load region;
   said stoichiometric mode being executed in a high-speed and high-load region that is positioned on a high-speed or high-load side relative to the low-speed and low-load region; and
   wherein in a leaning process in which an operating state of the internal combustion engine (10) changes from the stoichiometric mode to the lean mode, the control device (76) is configured to switch the flow velocity adjusting valve (72) from an open state to a closed state (116) after the lean mode is executed (108).

2. The control device (76) for an internal combustion engine (10) according to claim 1, wherein in an enriching process in which the operating state of the internal combustion engine (10) changes from the lean mode to the stoichiometric mode, the control device (76) is configured to switch the flow velocity adjusting valve (72) from the closed state to the open state at a time that or after the stoichiometric mode is executed.

3. The control device (76) for an internal combustion engine (10) according to claim 2, wherein the control device includes:

   an air-fuel ratio boundary (82, 96) that separates a lean region in which the lean mode is to be implemented and a stoichiometric region in which the stoichiometric mode is to be implemented, and
   an opening/closing boundary (84) that separates a closed valve region in which the closed state is to be implemented and an open valve region in which the open state is to be implemented, and
   wherein in the enriching process, the opening/closing boundary (84) is superposed on the air-fuel ratio boundary or is disposed on a high-speed and high-load side of the air-fuel ratio boundary (82); and
   wherein in the leaning process, the opening/closing boundary (84) is disposed on a low-speed and low-load side of the air-fuel ratio boundary (96).

4. The control device (76) for an internal combustion engine (10) according to claim 3, wherein the opening/closing boundary (84) of the enriching process and the opening/closing boundary (84) of the leaning process are common, and wherein the control device is configured to switch the air-fuel ratio boundary (82, 96) between the enriching process (82) and the leaning process (96) for being used.

5. The control device (76) for an internal combustion engine (10) according to claim 4, wherein when starting of the leaning process is detected (102) in the stoichiometric mode, the control device is configured to set the air-fuel ratio boundary (96) between an operating state at a time point at which the starting of the leaning process is detected and the opening/closing boundary (84).

6. The control device (76) for an internal combustion engine (10) according to any one of claims 1 to 5, wherein the control device is configured to:

   calculate an intake air reduction amount that accompanies switching from the open state to the closed state (112); and
   correct an air-fuel ratio of an air-fuel mixture of immediately after the switching toward a rich side by an amount

13

which is set to be larger as the intake air reduction increases (118).

7. The control device (76) for an internal combustion engine (10) according to claim 6, wherein the control device is configured to:

   calculate a torque reduction amount based on the intake air reduction amount and an air-fuel ratio at a time that the open state is switched to the closed state (112);
   calculate a target air-fuel ratio that compensates for the torque reduction amount (112); and
   correct the air-fuel ratio toward the rich side so that the target air-fuel ratio is realized (118).

8. The control device (76) for an internal combustion engine (10) according to claim 6 or 7, wherein the control device is configured to:

   calculate a rich control time period based on a rotation speed of the internal combustion engine (10) when the open state is switched to the closed state (114); and
   terminate the correction of the air-fuel ratio at a time point at which the rich control time period elapses after the switching (122).

# Fig. 1

Fig. 2

Fig. 3

Fig. 4

Fig. 5

Fig. 6

Fig. 7

Fig. 8

# Fig. 9

START

Read Ne. Kl. TCV —100

TCV Open and Deceleration ? —102
NO →

YES

Set A/F Boundary —104

Lean Region ? —106
NO ←

YES

Change to Lean Mode —108

TCV Close Region ? —110
NO ←

YES

Cal. Target A/F (A/Ft) —112

Cal. Rich Control Time —114

Close TCV —116

Rich Control —118

END of Rich Control ? —120
NO ←

YES

Terminate Rich Control —122

Normal Control —124

END

Fig. 10

Fig. 11

Fig. 12

Fig. 13

Fig. 14

Europäisches
Patentamt

European
Patent Office

Office européen
des brevets

# EUROPEAN SEARCH REPORT

Application Number

EP 16 17 5366

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 058 499 A2 (HITACHI LTD [JP]) 13 May 2009 (2009-05-13) | 1 | INV. F02D41/14 |
| Y | * paragraphs [0024], [0042] - [0043], | 2-5 | F02D41/30 |
| A | [0057], [0059] - [0060], [0097] - [0100], [0102], [0110] - [0111], [0114]; figures 1, 4-5, 12-13 * * paragraphs [0123], [0136] * | 6-8 | F02B31/06 F02D41/00 |
| Y | US 2015/167578 A1 (HOTTA SHINTARO [JP]) 18 June 2015 (2015-06-18) * paragraphs [0013], [0018], [0032], [0036], [0038], [0043], [0046]; figures 2-3 * | 2-5 | |
| A | EP 0 555 870 A2 (TOYOTA MOTOR CO LTD [JP]) 18 August 1993 (1993-08-18) * column 4, line 38 - line 53; figures 1-2 * * column 8, line 52 - column 9, line 50 * | 2-5 | |
| A | JP H11 247674 A (TOYOTA MOTOR CORP) 14 September 1999 (1999-09-14) * paragraphs [0124] - [0126], [0128] - [0129], [0134] - [0135]; figure 8 * | 2-5 | TECHNICAL FIELDS SEARCHED (IPC) F02D F02B |
| A | EP 0 884 461 A2 (NISSAN MOTOR [JP]) 16 December 1998 (1998-12-16) * column 1, line 9 - line 14 * * column 1, line 21 - line 54 * * column 2, line 12 - line 16 * * column 9, line 35 - column 10, line 3 * * column 10, line 25 - column 11, line 17 * * column 11, line 31 - column 12, line 5; figures 9-10 * | 1-8 | |

-/--

The present search report has been drawn up for all claims

| Place of search | Date of completion of the search | Examiner |
|---|---|---|
| The Hague | 4 November 2016 | Eitner, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 16 17 5366

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP S62 67228 A (MAZDA MOTOR) 26 March 1987 (1987-03-26) * the whole document * ----- | 1-8 | |
| A | JP S62 223438 A (MAZDA MOTOR) 1 October 1987 (1987-10-01) * abstract * ----- | 1-8 | |
| A | JP H08 121180 A (FUJI HEAVY IND LTD) 14 May 1996 (1996-05-14) * abstract * ----- | 1-8 | |

TECHNICAL FIELDS
SEARCHED      (IPC)

The present search report has been drawn up for all claims

| Place of search | Date of completion of the search | Examiner |
|---|---|---|
| The Hague | 4 November 2016 | Eitner, Christian |

EPO FORM 1503 03.82 (P04C01)

## ANNEX TO THE EUROPEAN SEARCH REPORT
## ON EUROPEAN PATENT APPLICATION NO.

EP 16 17 5366

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2016

| Patent document cited in search report | | Publication date | Patent family member(s) | | Publication date |
|---|---|---|---|---|---|
| EP 2058499 | A2 | 13-05-2009 | EP 2058499 A2<br>JP 4836088 B2<br>JP 2009115025 A<br>US 2009259387 A1 | | 13-05-2009<br>14-12-2011<br>28-05-2009<br>15-10-2009 |
| US 2015167578 | A1 | 18-06-2015 | JP 5967064 B2<br>JP 2015113806 A<br>US 2015167578 A1 | | 10-08-2016<br>22-06-2015<br>18-06-2015 |
| EP 0555870 | A2 | 18-08-1993 | DE 69302715 D1<br>DE 69302715 T2<br>EP 0555870 A2<br>JP 2867778 B2<br>JP H05222978 A<br>US 5363826 A | | 27-06-1996<br>07-11-1996<br>18-08-1993<br>10-03-1999<br>31-08-1993<br>15-11-1994 |
| JP H11247674 | A | 14-09-1999 | JP 3353689 B2<br>JP H11247674 A | | 03-12-2002<br>14-09-1999 |
| EP 0884461 | A2 | 16-12-1998 | DE 69825675 D1<br>DE 69825675 T2<br>EP 0884461 A2<br>JP 3774992 B2<br>JP H10339148 A<br>US 5970948 A | | 23-09-2004<br>13-01-2005<br>16-12-1998<br>17-05-2006<br>22-12-1998<br>26-10-1999 |
| JP S6267228 | A | 26-03-1987 | NONE | | |
| JP S62223438 | A | 01-10-1987 | NONE | | |
| JP H08121180 | A | 14-05-1996 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004293484 A
- JP 2003227395 A
- JP 11324739 A
- JP 2003293839 A